# EUROPEAN PATENT SPECIFICATION

(11) **EP 3 490 216 B1**
(45) Date of publication and mention of the grant of the patent: **20.04.2022**
(21) Application number: 17830446.5
(22) Date of filing: 17.07.2017
(51) Int. Cl.: H04L 9/40

(54) **RISK IDENTIFICATION METHOD, RISK IDENTIFICATION APPARATUS, AND CLOUD RISK IDENTIFICATION APPARATUS AND SYSTEM**
RISIKOIDENTIFIZIERUNGSVERFAHREN, RISIKOIDENTIFIZIERUNGSVORRICHTUNG UND CLOUD-RISIKO-IDENTIFIZIERUNGSVORRICHTUNG UND -SYSTEM
PROCÉDÉ D'IDENTIFICATION DE RISQUES, APPAREIL D'IDENTIFICATION DE RISQUES ET APPAREIL ET SYSTÈME D'IDENTIFICATION DE RISQUES EN CLOUD

(30) Priority: 22.07.2016 CN 201610587586
(43) Date of publication of application: 29.05.2019
(73) Proprietor: Advanced New Technologies Co., Ltd., George Town, Grand Cayman KY1-9008 (KY)
(72) Inventor: GU, Xi, Hangzhou Zhejiang 311121 (CN); LI, Caiwei, Hangzhou Zhejiang 311121 (CN); XIA, Jupeng, Hangzhou Zhejiang 311121 (CN)
(74) Representative: Fish & Richardson P.C.
(86) International application number: PCT/CN2017/093194
(87) International publication number: WO 2018/014812

(56) References cited:
- CN-A- 103 220 288
- CN-A- 104 753 868
- CN-A- 104 901 936
- CN-A- 104 980 402
- CN-A- 105 450 598
- US-A1- 2010 064 366
- ZHENG YAN ET AL: "Unwanted Traffic Control via Hybrid Trust Management", TRUST, SECURITY AND PRIVACY IN COMPUTING AND COMMUNICATIONS (TRUSTCOM), 2012 IEEE 11TH INTERNATIONAL CONFERENCE ON, IEEE, 25 June 2012 (2012-06-25), pages 666-673, XP032233473, DOI: 10.1109/TRUSTCOM.2012.291 ISBN: 978-1-4673-2172-3
- ABRAHAM ET AL: "D-SCIDS: Distributed soft computing intrusion detection system", JOURNAL OF NETWORK AND COMPUTER APPLICAT, ACADEMIC PRESS, NEW YORK, NY, US, vol. 30, no. 1, 3 November 2006 (2006-11-03), pages 81-98, XP005732213, ISSN: 1084-8045, DOI: 10.1016/J.JNCA.2005.06.001
- Raja Jurdak ET AL: "Wireless Sensor Network Anomalies: Diagnosis and Detection Strategies" In: "Intelligence-Based Systems Engineering", 1 January 2011 (2011-01-01), Springer Berlin Heidelberg, Berlin, Heidelberg, XP055444636, ISBN: 978-3-642-17930-3 vol. 10, pages 309-325, DOI: 10.1007/978-3-642-17931-0_12, * section 3.1, last paragraph *

## Description

### TECHNICAL FIELD

The present application relates to the field of Internet information processing technologies, and in particular, to a risk identification method, a risk identification apparatus, and a cloud risk identification apparatus and system.

### BACKGROUND

With the development of Internet technologies, various e-commerce platforms emerge. Among these e-commerce platforms, there is an Internet financial service platform. For Internet financial service platforms, how to effectively control a risk is a prioritized important problem.

In an actual application, as the services, products, and transactions are increasingly complex in an Internet financial service platform, it is correspondingly harder to control risks. Currently, an effective risk control method is as follows:

A front-end device of an Internet financial service platform collects different types of data. Here, the different types of data include device data, environment data, behavior data, etc. The front-end device transmits the collected different types of data to a risk control server by using a network. The risk control server processes or computes the received different types of data, performs risk identification and processing on service behavior of a client device, and then returns a risk identification result to the front-end device, to effectively implement risk control.

However, according to a research, after the front-end device collects different types of data, as the collected data is relatively large, a very high requirement is imposed on network transmission, background computing resources, data storage, etc. of a system. Consequently, after the risk control server receives a large amount of data sent by the front-end device, it takes a relatively long time to compute data, and risk control efficiency is reduced.

"Unwanted Traffic Control via Hybrid Trust Management" by Zheng Yan et al. describes an unwanted traffic control solution through hybrid trust management. A hybrid trust management system controls unwanted traffic from its source to destinations according to trust evaluation at a Global Trust Operator and traffic and behavior analysis at hosts. The system can support unwanted traffic control in both a distributed and centralized manner and in both a defensive and offensive way.

### SUMMARY

In view of this, implementations of the present application provide a risk identification method, a risk identification apparatus, and a cloud risk identification apparatus and system, to alleviate existing technology's problem that a risk control server takes a relatively long time to process received data, which causes relatively low risk control efficiency.

The present invention is defined by the independent claims. The dependent claims depict advantageous embodiments of the present invention.

At least one of the previously described technical solutions used in the implementations of the present application can achieve the following beneficial effects:

After collecting the service data, the end-user device performs risk identification on the service processing request that generates the service data based on the stored risk identification rule or the stored risk identification model, and when a risk identification result cannot be determined, triggers the cloud risk identification device to perform risk identification on the service processing request that generates the service data. A distributed risk identification architecture is provided in the implementations of the present application. This effectively alleviates an existing technology's problem that a risk control server takes a relatively long time to process received data, which causes relatively low risk control efficiency; reduces the operation burden of the risk control server through this type of multi-layered risk identification; reduces overheads of system resources; and also completes risk identification on the end-user device, to shorten the time of risk identification, and improve user experience.

### BRIEF DESCRIPTION OF DRAWINGS

The accompanying drawings described here are intended to provide a further understanding of the present application, and constitute a part of the present application. The illustrative implementations of the present application and descriptions thereof are intended to describe the present application, and do not constitute improper limitations on the present application. In the accompanying drawings:
FIG. 1 is a schematic flowchart illustrating a risk identification method, according to an implementation of the present application;
FIG. 2 is a schematic flowchart illustrating a risk identification method, according to an implementation of the present application;
FIG. 3 is a schematic flowchart illustrating a risk identification method, according to an implementation of the present application;
FIG. 4 is a schematic diagram illustrating a scenario of a risk identification method, according to an implementation of the present application;
FIG. 5 is a schematic structural diagram illustrating a risk identification apparatus applied to an end-user device, according to an implementation of the present application;
FIG. 6 is a schematic structural diagram illustrating a risk identification apparatus applied to an end-user device, according to an implementation of the present application;
FIG. 7 is a schematic structural diagram illustrating a cloud risk identification apparatus, according to an implementation of the present application;
FIG. 8 is a schematic structural diagram illustrating a cloud risk identification apparatus, according to an implementation of the present application;
FIG. 9 is a schematic structural diagram illustrating a risk identification system, according to an implementation of the present application; and
FIG 10 is a schematic structural diagram illustrating an intelligent platform device, according to an implementation of the present application.

### DESCRIPTION OF EMBODIMENTS

To achieve an objective of the present application, implementations of the present application disclose a risk identification method, a risk identification apparatus, and a cloud risk identification apparatus and system. After collecting service data, an end-user device performs risk identification on a service processing request that generates the service data based on a stored risk identification rule or a stored risk identification model, and when a risk identification result cannot be determined, triggers a cloud risk identification device to perform risk identification on the service processing request that generates the service data. A distributed risk identification architecture is provided in the implementations of the present application. This effectively alleviates an existing technology's problem that a risk control server takes a relatively long time to process received data, which causes relatively low risk control efficiency; reduces the operation burden of the risk control server through this type of multi-layered risk identification; reduces overheads of system resources; and also completes risk identification on the end-user device, to shorten the time of risk identification, and improve user experience.

It is worthwhile to note that, the cloud risk identification apparatus described in the implementations of the present application can be a cloud-based risk identification device, or can be a risk control system of a server. Implementations are not specifically limited here.

The risk identification apparatus described in the implementations of the present application can be a client device-based risk identification end-user device, can be integrated into application software of a client device, and can support requirements of different operating systems. Implementations are not specifically limited here.

The risk identification apparatus here can be carried on a mobile end-user device, or can be carried on a PC device. The risk identification method applied to the end-user device according to the implementations of the present application can also be applied to APP client software installed in the mobile end-user device, or can be a control element in the PC device. Implementations are not specifically limited here.

It is worthwhile to note that, there is a difference between a risk identification rule stored in the cloud risk identification device and a risk identification rule stored in the end-user device.

The following clearly and comprehensively describes the technical solutions in the present application with reference to the specific implementations of the present application and the corresponding accompanying drawings. Apparently, the described implementations are merely some but not all of the implementations of the present application. Other implementations obtained by a person of ordinary skill in the art based on the implementations of the present application without creative efforts shall fall within the protection scope of the present application.

The technical solutions provided in the implementations of the present application are described in detail below with reference to the accompanying drawings.

### Implementation 1

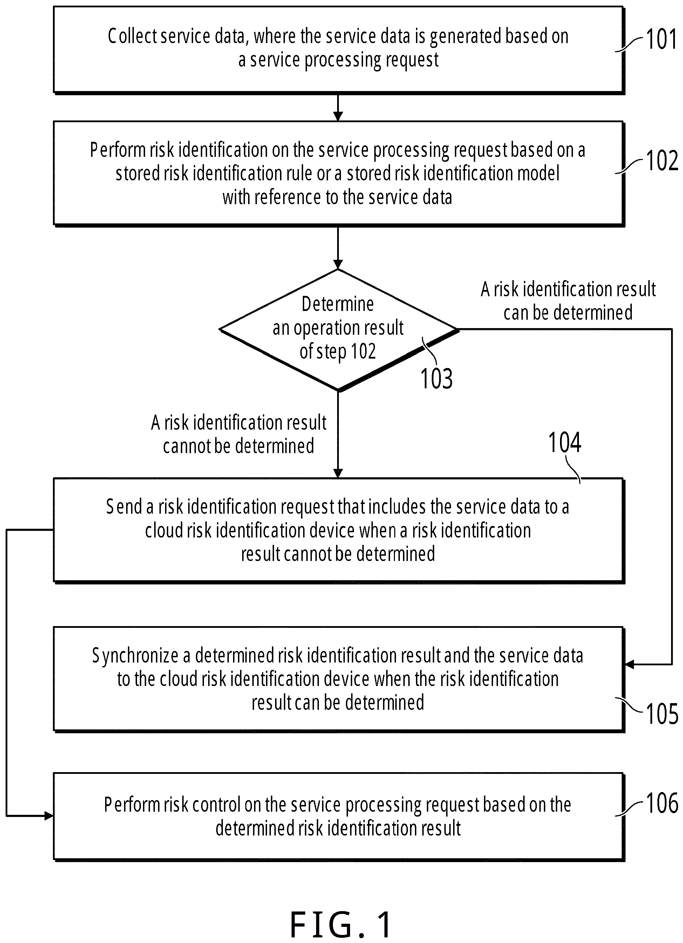

FIG. 1 is a schematic flowchart illustrating a risk identification method, according to an implementation of the present application. The method can be described as follows. This implementation of the present application can be executed by an end-user device.

Step 101: Collect service data, where the service data is generated based on a service processing request.

In this implementation of the present application, the end-user device receives a service processing request sent by a user, and starts a risk identification operation when receiving the service processing request. This can ensure timely risk control during service processing.

When starting the risk identification operation, the end-user device uses service data generated by the service processing request in real time or periodically. The service data here includes but is not limited to device data (for example, a device identifier and data generated when a device is running), environment data, user behavior data generated in a process of service execution by a user, transaction data generated in a service execution process, etc.

Step 102: Perform risk identification on the service processing request based on a stored risk identification rule or a stored risk identification model with reference to the service data.

In this implementation of the present application, after collecting the service data, the end-user device analyzes the service data, and performs risk identification on the service processing request based on the stored risk identification rule or the stored risk identification model with reference to an analysis result.

Specifically, the end-user device determines a service indicator corresponding to the service data based on the collected service data. The service indicator described in this implementation of the present application can include but is not limited to a count value, a sum value, a start value, an end value, a difference value, an average value, a standard deviation, a maximum value, and/or a minimum value of the service data in a predetermined time window. The end-user device analyzes a characteristic of occurrence frequency of the service processing request and/or a running environment characteristic of the end-user device based on the determined service indicator and the service data. The end-user device triggers a rule engine and/or a model engine to perform logical analysis and/or probability analysis on the determined service indicator, to obtain an analysis result.

The end-user device determines a risk identification result of the service processing request based on the analysis result.

A risk identification rule stored in the end-user device described in this implementation of the present application can be delivered by a background server, or can be requested from a background server. Implementations are not limited here. In addition, the risk identification solution described in this implementation of the present application can include an intelligent platform device. The intelligent platform device stores a risk identification rule, a risk control policy, etc., and the end-user device can also obtain a risk identification rule from the intelligent platform device. Implementations are not specifically limited here.

It is worthwhile to note that, the intelligent platform device described in this implementation of the present application and the background server described in the existing technology can be the same device, or can be different devices. If the intelligent platform device and the background server are different devices, a difference lies in that the intelligent platform device described in this implementation of the present application can be a service platform with an integrated development and maintenance function, and can be used to develop and maintain variables, rules, models, etc. The functions of the intelligent platform device are more comprehensive than those of the background server.

It is worthwhile to note that in this implementation of the present application, the end-user device can perform risk identification on the service processing request by using a processing method supported by the end-user device, and a specific processing method is not specifically limited.

Step 103: Determine an operation result of step 102. If a risk identification result cannot be determined, perform step 104; or if a risk identification result can be determined, perform step 105 and/or step 106.

In this implementation of the present application, because a condition such as a computing capability of the end-user device is limited, or some risk identification rules are not suitable for an end-user device, or for other reasons, in step 102, that the end-user device performs risk identification on the service processing request has the following two cases:
Case 1: A risk identification result can be determined. Case 2: A risk identification result cannot be determined.

When the service data or the analysis result is entered into the rule engine and/or the model engine, if an output result is a definite result (for example, Accept or Reject), it indicates that a risk identification result can be determined.

If the output result is an indefinite result (for example, Unknown or NULL), it indicates that a risk identification result cannot be determined.

The definite result described in this implementation of the present application can be understood as a result that can provide a definite direction for a next step of risk control.

Therefore, for different input results, the end-user device triggers execution of different operations.

Step 104: Send a risk identification request that includes the service data to a cloud risk identification device when a risk identification result cannot be determined.

The risk identification request is used to request the cloud risk identification device to perform risk identification on the service processing request that generates the service data.

In this implementation of the present application, if a risk identification result cannot be determined in step 102, it indicates that the end-user device cannot accurately identify risk behavior that occurs. The cloud risk identification device needs to determine the risk behavior. In this case, the end-user device needs to send the risk identification request to the cloud risk identification device, and adds the collected service data to the risk identification request.

Step 105: Synchronize a determined risk identification result and the service data to the cloud risk identification device when the risk identification result can be determined.

In this implementation of the present application, step 105 and the case described in step 106 can be performed at the same time, or can be performed sequentially. Implementations are not specifically limited here.

It is worthwhile to note that, when the risk identification result and the service data are synchronizing to the cloud risk identification device, key data in the service data can be selected and sent to the cloud risk identification device. As such, synchronization can be implemented, a relatively small amount of transmitted data can be ensured, a data transmission rate can be improved, and system resource consumption can be reduced.

Step 106: Perform risk control on the service processing request based on the determined risk identification result.

In this implementation of the present application, an operation in step 106 can be performed based on the following two cases:
Case 1: A risk identification result can be determined in step 102, that is, a definite risk identification result is obtained.

The end-user device sends the obtained definite risk identification result to a service processing unit in the end-user device, to perform effective risk control on the service processing request.

In addition, step 105 can be triggered.

Case 2: A risk identification result cannot be determined in step 102.

Therefore, when the end-user device cannot determine a risk identification result in step 104, the end-user device sends the risk identification request to the cloud risk identification device. Once the end-user device receives the risk identification result sent by the cloud risk identification device, risk control can be performed on the service processing request based on the received risk identification result.

Specifically, the end-user device sends the received risk identification result to the service processing unit in the end-user device, to perform effective risk control on the service processing request.

According to the technical solutions provided in this implementation of the present application, after collecting the service data, the end-user device performs risk identification on the service processing request that generates the service data based on the stored risk identification rule or the stored risk identification model, and when a risk identification result cannot be determined, triggers the cloud risk identification device to perform risk identification on the service processing request that generates the service data. A distributed risk identification architecture is provided in this implementation of the present application. This effectively alleviates an existing technology's problem that a risk control server takes a relatively long time to process received data, which causes relatively low risk control efficiency; reduces the operation burden of the risk control server through this type of multi-layered risk identification; reduces overheads of system resources; and also completes risk identification on the end-user device, to shorten the time of risk identification, and improve user experience.

### Implementation 2

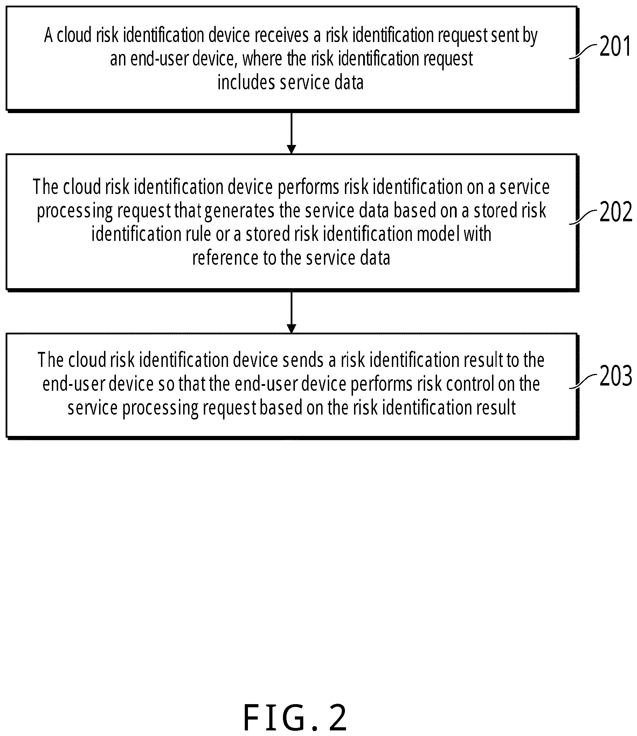

Based on the same invention concept, FIG. 2 is a schematic flowchart illustrating a risk identification method, according to an implementation of the present application. This implementation of the present application can be executed by a cloud risk identification device.

Step 201: The cloud risk identification device receives a risk identification request sent by an end-user device, where the risk identification request includes service data.

In this implementation of the present application, the risk identification request that is sent by the end-user device and received by the cloud risk identification device is sent when the end-user device cannot determine a risk identification result.

Step 202: The cloud risk identification device performs risk identification on a service processing request that generates the service data based on a stored risk identification rule or a stored risk identification model with reference to the service data.

There is a difference between a risk identification rule stored in the cloud risk identification device and a risk identification rule stored in the end-user device.

In this implementation of the present application, because the cloud risk identification device can support risk identification of complex risk behavior, when the end-user device cannot identify risk behavior, for the received risk identification request sent by the end-user device, the end-user device extracts the service data included in the risk identification request, and analyzes the service data, and further performs risk identification on the service processing request that generates the service data based on the stored risk identification rule or the stored risk identification model with reference to an analysis result.

Step 203: The cloud risk identification device sends a risk identification result to the end-user device so that the end-user device performs risk control on the service processing request based on the risk identification result.

Optionally, in this implementation of the present application, assume that the end-user device can determine a risk identification result. The cloud risk identification device described in this implementation of the present application can also receive a risk identification result sent by the end-user device, and store the risk identification result and obtain service data of the risk identification result. As such, the cloud risk identification device can subsequently use the stored risk identification result and the service data as a training sample, to optimize a risk identification rule and improve the risk identification accuracy.

By using the risk identification solution described in this implementation of the present application, when the end-user device cannot determine a risk identification result of a service processing request, the cloud risk identification device performs risk identification on the service processing request based on received service data and the stored risk identification rule or the stored risk identification model. As such, in the risk identification solution provided in this implementation of the present invention, the "end + cloud" mode is used to reduce the data computation burden of the cloud risk identification device. In addition, with the strong computing capability, the cloud risk identification device can perform risk identification on complex risk behavior, thereby ensuring the risk identification accuracy.

### Implementation 3

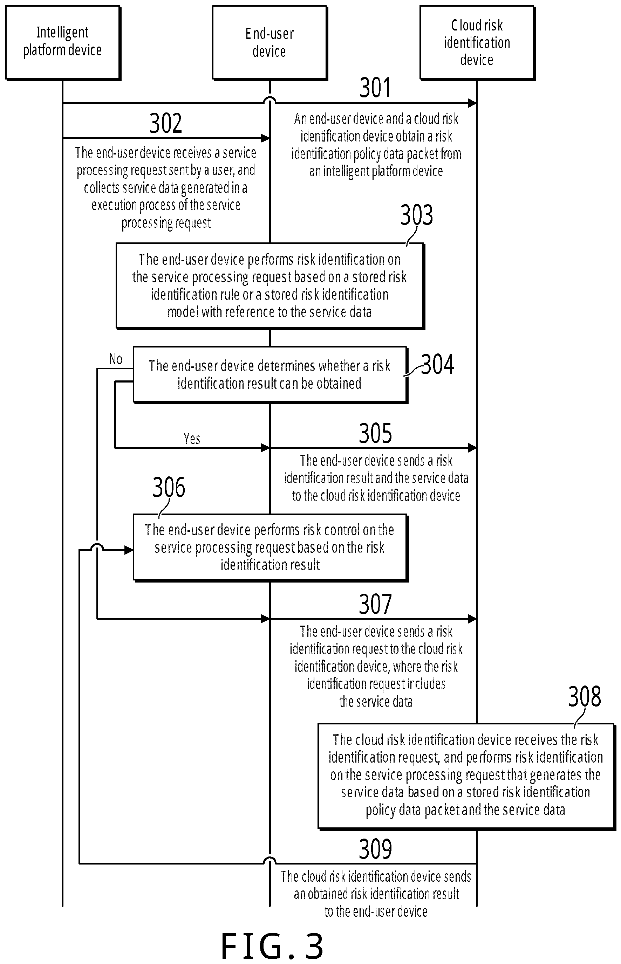

Based on the same invention concept, FIG. 3 is a schematic flowchart illustrating a risk identification method, according to an implementation of the present application.

Step 301: An end-user device and a cloud risk identification device obtain a risk identification policy data packet from an intelligent platform device.

In this implementation of the present application, the intelligent platform device updates a stored risk identification policy data packet in real time or periodically, and transmits the risk identification policy data packet to the end-user device and the cloud risk identification device through pushing (Push) or pulling (Pull). As such, the end-user device and the cloud risk identification device synchronously update a locally stored risk identification policy data packet.

Step 302: The end-user device receives a service processing request sent by a user, and collects service data generated in an execution process of the service processing request.

Step 303: The end-user device performs risk identification on the service processing request based on a stored risk identification rule or a stored risk identification model with reference to the service data.

Step 304: The end-user device determines whether a risk identification result can be obtained, and if yes, performs step 305, or if no, performs step 307.

Step 305: The end-user device sends a risk identification result and the service data to the cloud risk identification device.

Step 306: The end-user device performs risk control on the service processing request based on the risk identification result.

Step 307: The end-user device sends a risk identification request to the cloud risk identification device, where the risk identification request includes the service data.

Step 308: The cloud risk identification device receives the risk identification request, and performs risk identification on the service processing request that generates the service data based on a stored risk identification policy data packet and the service data.

Step 309: The cloud risk identification device sends an obtained risk identification result to the end-user device, and jumps to step 306.

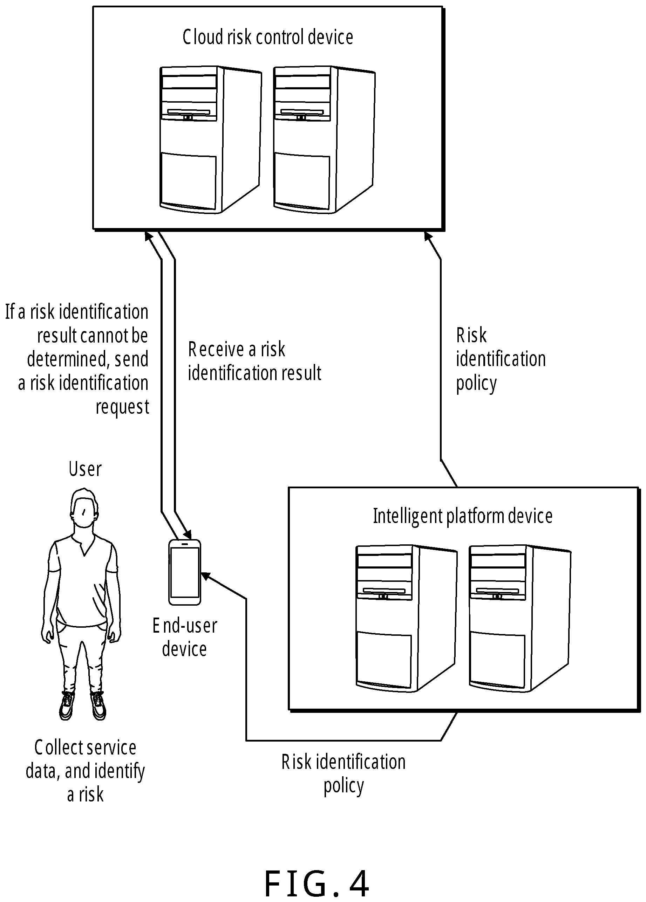

FIG. 4 is a schematic diagram illustrating a scenario of the risk identification method, according to this implementation of the present application.

It can be seen from FIG. 4 that after collecting the service data, the end-user device performs risk identification on the service processing request that generates the service data based on the stored risk identification rule or the stored risk identification model, and when a risk identification result cannot be determined, triggers the cloud risk identification device to perform risk identification on the service processing request that generates the service data. A distributed risk identification architecture is provided in this implementation of the present application. This effectively alleviates an existing technology's problem that a risk control server takes a relatively long time to process received data, which causes relatively low risk control efficiency; reduces the operation burden of the risk control server through this type of multi-layered risk identification; reduces overheads of system resources; and also completes risk identification on the end-user device, to shorten the time of risk identification, and improve user experience.

### Implementation 4

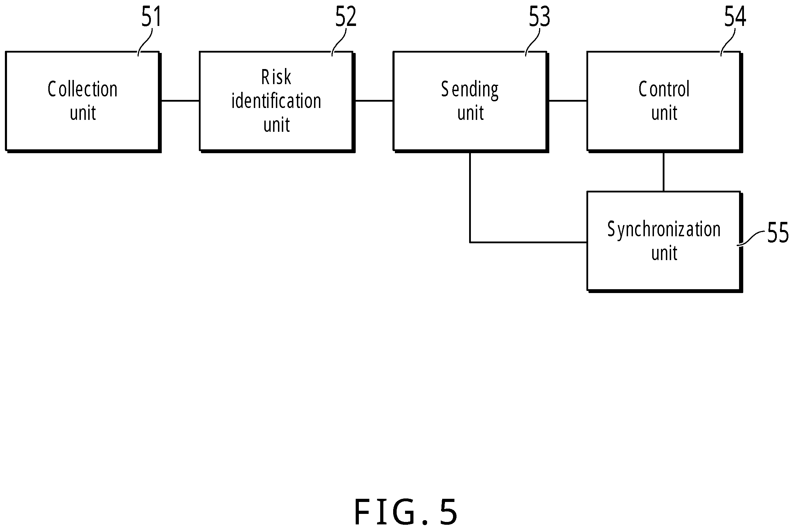

FIG 5 is a schematic structural diagram illustrating a risk identification apparatus applied to an end-user device, according to an implementation of the present application. The risk identification apparatus includes a collection unit 51, a risk identification unit 52, and a sending unit 53.

The collection unit 51 is configured to collect service data, where the service data is generated based on a service processing request.

The risk identification unit 52 is configured to perform risk identification on the service processing request based on a stored risk identification rule or a stored risk identification model with reference to the service data.

The sending unit 53 is configured to send a risk identification request that includes the service data to a cloud risk identification device when a risk identification result cannot be determined, where the risk identification request is used to request the cloud risk identification device to perform risk identification on the service processing request that generates the service data.

In another implementation of the present application, the risk identification apparatus further includes a control unit 54.

The control unit 54 performs risk control on the service processing request based on a risk identification result determined by the risk identification unit.

In another implementation of the present application, the risk identification apparatus further includes a synchronization unit 55.

The synchronization unit 55 is configured to synchronize a determined risk identification result and the service data to the cloud risk identification device when the risk identification unit can determine the risk identification result.

In another implementation of the present application, the control unit 54 performs risk control on the service processing request based on the determined risk identification result, including the following: receiving a risk identification result sent by the cloud risk identification device; and performing risk control on the service processing request based on the received risk identification result.

In another implementation of the present application, the risk identification unit 52 performs risk identification on the service processing request based on the stored risk identification rule or the stored risk identification model with reference to the service data, including the following: analyzing the service data; and performing risk identification on the service processing request based on the stored risk identification rule or the stored risk identification model with reference to an analysis result.

It is worthwhile to note that, the risk identification apparatus provided in this implementation of the present application can be implemented by using hardware or software. Implementations are not limited here. The risk identification apparatus can be carried on the end-user device. After collecting the service data, the end-user device performs risk identification on the service processing request that generates the service data based on the stored risk identification rule or the stored risk identification model, and when a risk identification result cannot be determined, triggers the cloud risk identification device to perform risk identification on the service processing request that generates the service data. According to the provided distributed risk identification architecture, this effectively alleviates an existing technology's problem that a risk control server takes relatively long time to process received data, which causes relatively low risk control efficiency; reduces the operation burden of the risk control server through this type of multi-layered risk identification; reduces overheads of system resources; and also completes risk identification on the end-user device, to shorten the time of risk identification, and improve user experience.

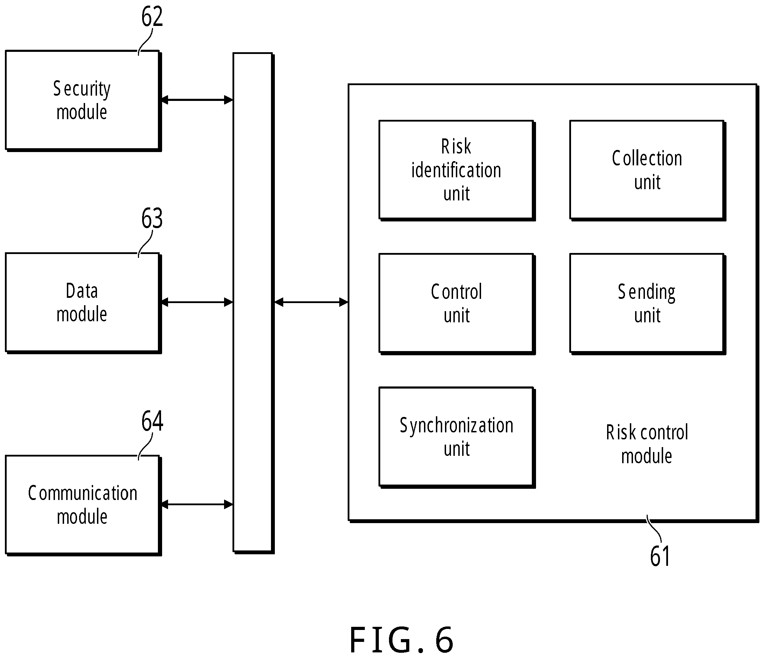

FIG. 6 is a schematic structural diagram illustrating a risk identification apparatus applied to an end-user device, according to an implementation of the present application. Assume that the functions described in FIG. 5 are integrated into a risk control module 61 of the risk identification apparatus. In addition to the risk control module 61, the risk identification apparatus shown in FIG. 6 includes a security module 62, a data module 63, and a communication module 64.

The data module 63 can collect device data, environment data, behavior data, transaction data, etc., can collect socket data, service call information, etc., can identify abnormal environments, for example, performing simulator identification, can perform secure storage and query of data, and can perform data processing and a data operation, such as an arithmetic operation, a logical operation, and Velocity calculation.

The risk control module 61 supports a rule engine and a model engine on the end-user device, analyzes and computes collected service data corresponding to a service processing request based on the rule engine and the model engine, and further performs risk identification on the service processing request.

The security module 62 supports anti-cracking, anti-injection, and anti-adjustment, and can provide a virtual secure environment (Virtual Secure Environment) for algorithms, variables, rules, models, etc. that are deployed on the end-user device.

The communication module 64 can receive data, algorithms, rules, models, etc. that are pushed from a server to an end, supports synchronous call of a "cloud" risk control service, supports asynchronous call of the "cloud" risk control service, and can communicate with the server in other forms, for example, performing status monitoring.

For example, a risk identification request is sent to a cloud risk identification device, and a risk identification result sent by the cloud risk identification device is received.

The end-user device described in this implementation of the present application can also be referred to as an Edge end risk control device, can be a risk control system based on a mobile device, supports an Android and an ISO operating platform, and can be deployed in a client device. As such, the end-user device can "use service data as soon as the data is collected", and can perform risk identification on a service processing request corresponding to the service data in time, effectively alleviating a risk identification delay caused by transmitting data to a background server, reducing resource consumption of the background server, and improving working efficiency of the entire risk identification system.

### Implementation 5

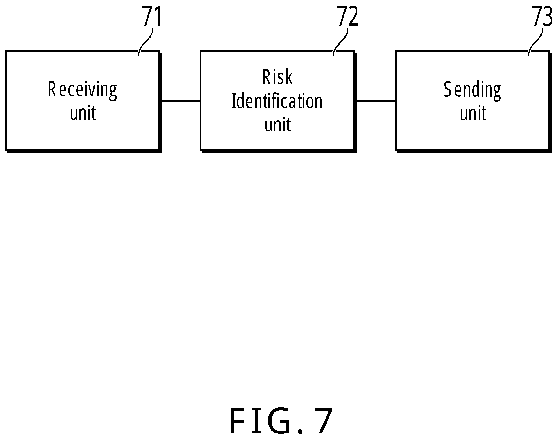

FIG. 7 is a schematic structural diagram illustrating a cloud risk identification apparatus, according to an implementation of the present application. The cloud risk identification apparatus includes a receiving unit 71 and a risk identification unit 72.

The receiving unit 71 is configured to receive a risk identification request sent by an end-user device, where the risk identification request includes service data.

The risk identification unit 72 is configured to perform risk identification on a service processing request that generates the service data based on a stored risk identification rule or a stored risk identification model with reference to the service data.

In another implementation of the present application, the cloud risk identification apparatus further includes a sending unit 73.

The sending unit 73 is configured to send a risk identification result to the end-user device so that the end-user device performs risk control on the service processing request based on the risk identification result.

In another implementation of the present application, the risk identification unit 72 performs risk identification on the service processing request that generates the service data based on the stored risk identification rule or the stored risk identification model with reference to the service data, including the following: analyzing the service data; and performing risk identification on the service processing request that generates the service data based on the stored risk identification rule or the stored risk identification model with reference to an analysis result.

In another implementation of the present application, there is a difference between a risk identification rule stored in a cloud risk identification device and a risk identification rule stored in the end-user device.

It is worthwhile to note that, the cloud risk identification apparatus provided in this implementation of the present application can be implemented by using hardware or software. Implementations are not limited here. When the end-user device cannot determine a risk identification result of a service processing request, the cloud risk identification apparatus described in this implementation of the present application performs risk identification on the service processing request based on received service data and the stored risk identification rule or the stored risk identification model. As such, in the risk identification solution provided in this implementation of the present invention, the "end + cloud" mode is used to reduce the data computation burden of the cloud risk identification device. In addition, with the strong computing capability, the cloud risk identification device can perform risk identification on complex risk behavior, thereby ensuring the risk identification accuracy.

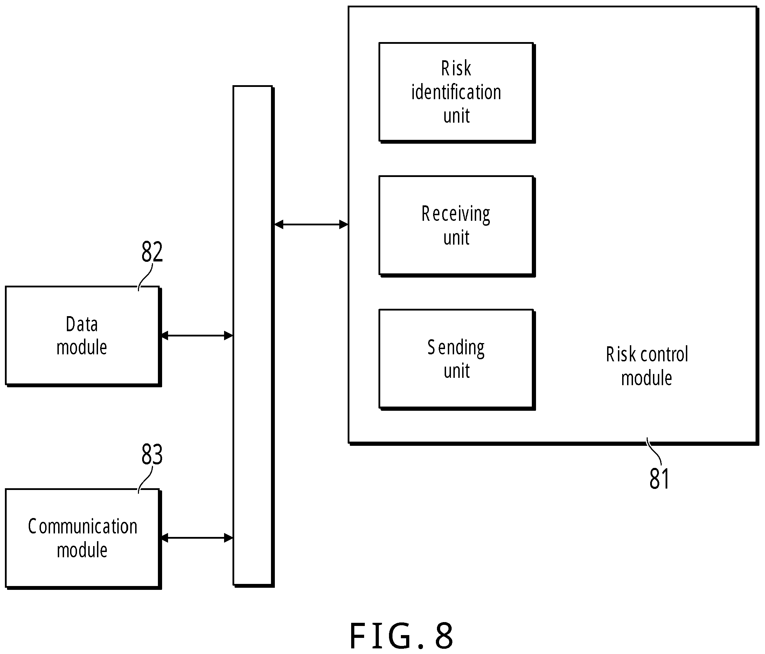

Based on the same invention concept, FIG. 8 is a schematic structural diagram illustrating a cloud risk identification apparatus, according to an implementation of the present application. Assume that the functions described in FIG. 7 are integrated into a risk control module 81 of a cloud risk identification device. In addition to the risk control module 81, the cloud risk identification apparatus shown in FIG 8 includes a data module 82 and a communication module 83.

The risk control module 81 supports a rule engine and a model engine on a background server, and performs risk identification on a service processing request that generates service data based on a stored risk identification rule and the service data included in a received risk identification request.

The data module 82 can receive different types of data, store and query different types of data, and perform data processing and a data operation.

The communication module 83 receives data sent by an end-user device (including service data, a request message, etc.), receives a risk identification policy data packet, a risk identification rule, a risk identification model, etc. sent by an intelligent platform device, and supports synchronous or asynchronous data invocation between the communication module and the end-user device.

The cloud risk identification apparatus described in this implementation of the present application can be a server based risk control system, and provides a web service interface of RESTful and SOAP. The apparatus has a strong computing capability, large capacity storage space, and relatively high security.

### Implementation 6

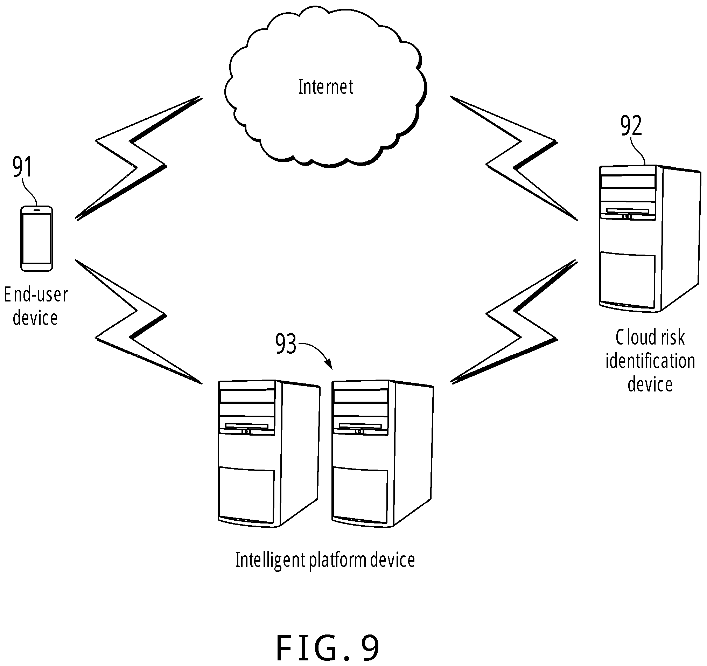

FIG. 9 is a schematic structural diagram illustrating a risk identification system, according to an implementation of the present application. The risk identification system includes an end-user device 91 and a cloud risk identification device 92.

The end-user device 91 collects service data, where the service data is generated based on a service processing request; performs risk identification on the service processing request based on a stored risk identification rule or a stored risk identification model with reference to the service data; and sends a risk identification request that includes the service data to the cloud risk identification device when a risk identification result cannot be determined.

The cloud risk identification device 92 receives the risk identification request sent by the end-user device, and performs risk identification on the service processing request that generates the service data based on the stored risk identification rule or the stored risk identification model with reference to the service data.

In another implementation of the present application, the risk identification system further includes an intelligent platform device 93.

The intelligent platform device 93 monitors a running status of the end-user device and a running status of the cloud risk identification device, and separately pushes a risk identification rule or a risk identification model to the end-user device and the cloud risk identification device.

The end-user device and the cloud risk control device in this implementation of the present application have the functions described in the previous implementations, and details are omitted here for simplicity.

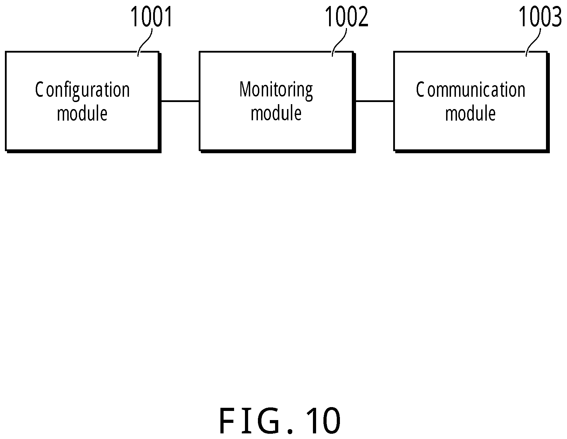

FIG. 10 is a schematic structural diagram illustrating an intelligent platform device, according to an implementation of the present application. The intelligent platform device included in a risk identification system in this implementation of the present application can include a configuration module 1001, a monitoring module 1002, and a communication module 1003.

The configuration module 1001 configures various variables, rules, models, etc.

The monitoring module 1002 can monitor a running status of an end-user device and a running status of a cloud risk identification device.

The communication module 1003 can separately push a risk identification rule to the end-user device and the cloud risk identification device.

The intelligent platform device described in this implementation of the present application can be a service platform with an integrated development and maintenance function, and can be used to develop and maintain variables, rules, models, etc., to dynamically update risk identification policies used by the risk identification system described in this implementation of the present application.

Beneficial effects of the risk identification solutions provided in the implementations of the present application are as follows:
1. In the "end + cloud" risk control solution, the end-user device can "use service data as soon as having collected the data", without a need to transmit a large amount of data to the background server, and network overheads are reduced and background server resources are saved. In addition, key data and data related to complex risk behavior are sent to the background server in this implementation of the present application. Strong computing resources in the background of the "cloud" are used to process risk identification requests that need a large amount of computation, thereby ensuring risk control identification accuracy.
2. Because risk identification can be currently performed on a large number of services (for example, most normal transactions and especially obvious problem transactions) at the "end", a network delay and a background operation time are no longer generated during this part of risk control identification, and user experience can be improved. In addition, background service congestion is alleviated.
3. Because some risk control computation tasks are put at the front "end", the computation burden of the "cloud" background is reduced, and background costs are reduced. In addition, because risk control of the "end" is introduced, some risk control requests no longer rely on the centralized background. Therefore, this distribution design improves availability and fault-tolerance capability of a risk control service.

A person skilled in the art should understand that an implementation of the present invention can be provided as a method, a system, or a computer program product. Therefore, the present invention can use a form of hardware only implementations, software only implementations, or implementations with a combination of software and hardware. In addition, the present invention can use a form of a computer program product that is implemented on one or more computer-usable storage media (including but not limited to a disk memory, a CD-ROM, an optical memory, etc.) that include computer-usable program code.

The present invention is described with reference to the flowcharts and/or block diagrams of the method, the device (system), and the computer program product according to the implementations of the present invention. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a special-purpose computer, a built-in processor, or a processor of another programmable data processing device to generate a machine. As such, the instructions executed by the computer or the processor of the another programmable data processing device generate an apparatus for implementing a specific function in one or more flows in the flowcharts and/or in one or more blocks in the block diagrams.

These computer program instructions can be stored in a computer readable memory that can instruct the computer or the another programmable data processing device to work in a specific way. As such, the instructions stored in the computer readable memory generate a manufacture that includes an instruction apparatus. The instruction apparatus implements a specific function in one or more flows in the flowcharts and/or in one or more blocks in the block diagrams.

These computer program instructions can be loaded onto the computer or the another programmable data processing device. As such, a series of operations and steps are performed on the computer or the another programmable device, thereby generating computer-implemented processing. Therefore, the instructions executed on the computer or the another programmable device provide steps for implementing a specific function in one or more flows in the flowcharts and/or in one or more blocks in the block diagrams.

In a typical configuration, a computing device includes one or more processors (CPU), an input/output interface, a network interface, and a memory.

The memory can include a non-persistent memory, a random access memory (RAM), a non-volatile memory, and/or another form in a computer readable medium, for example, a read-only memory (ROM) or a flash memory (flash RAM). The memory is an example of the computer readable medium.

The computer readable medium includes persistent, non-persistent, movable, and unmovable media that can implement information storage by using any method or technology. Information can be a computer readable instruction, a data structure, a program module, or other data. An example of a computer storage medium includes but is not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a tape and disk storage or another magnetic storage device or any other non-transmission media that can be configured to store information that a computing device can access. Based on the definition in the present specification, the computer readable medium does not include transitory computer-readable medium, for example, a modulated data signal and carrier.

It is worthwhile to further note that the terms "include", "include", or their any other variant is intended to cover a non-exclusive inclusion. As such, a process, a method, a merchandise, or a device that includes a list of elements not only includes those elements but also includes other elements which are not expressly listed, or further includes elements inherent to such a process, a method, a merchandise, or a device. An element preceded by "includes a ..." does not, without more constraints, preclude the existence of additional identical elements in the process, method, merchandise, or device that includes the element.

A person skilled in the art should understand that an implementation of the present application can be provided as a method, a system, or a computer program product. Therefore, the present application can use a form of hardware only implementations, software only implementations, or implementations with a combination of software and hardware. In addition, the present application can use a form of a computer program product that is implemented on one or more computer-usable storage media (including but not limited to a disk memory, a CD-ROM, an optical memory, etc.) that include computer-usable program code.

The previous descriptions are merely implementations of the present application, and are not intended to limit the present application. For a person skilled in the art, the present application can have various modifications and changes.

## Claims

1. A method for risk identification comprising:
receiving (101), by an end user device, a service processing request;
extracting (101), by the end user device, service data from the service processing request;
performing (102), by the end user device, first risk identification on the service processing request based on a first stored risk identification rule with reference to the service data to generate a first risk identification result, wherein the first stored risk identification rule is stored at the end user device;
determining (103), by the end user device, whether the first risk identification result is a definite result or an indefinite result, wherein the definite result indicates that the first risk identification result can be determined and the indefinite result indicates that the first risk identification result cannot be determined;
in response to determining that the first risk identification result is the indefinite result,
sending (104), by the end user device, a risk identification request that comprises the service data to a cloud risk identification device, wherein the risk identification request causes the cloud risk identification device to perform (202) second risk identification on the service processing request based on a second stored risk identification rule with reference to the service data to generate a second risk identification result, wherein the second stored risk identification rule is different from the first stored risk identification rule, wherein the second stored risk identification rule is stored at the cloud risk identification device;
in response to determining that the first risk identification result is the definite result,
sending (105), by the end user device, the first risk identification result to the cloud risk identification device,
receiving and storing, at the cloud risk identification device, the first risk identification result sent from the end user device, and
obtaining, by the cloud risk identification device, service data of the first risk identification result; and
using, by the cloud risk identification device, i) the stored first risk identification result and ii) the obtained service data as a training sample to optimize the second stored risk identification rule to improve risk identification accuracy.

2. The method according to claim 1, further comprising:
in response to determining that the first risk identification result is the definite result, performing (106), by a service processing unit in the end user device, risk control on the service processing request.

3. The method according to claim 1, wherein the first risk identification result is the indefinite result, the method further comprising:
receiving (203), by the end user device, the second risk identification result sent by the cloud risk identification device; and
performing (106) risk control on the service processing request based on the received, second risk identification result.

4. The method according to any one of claims 1 to 3, wherein performing the first risk identification on the service processing request based on the first stored risk identification rule with reference to the service data comprises:
analyzing the service data; and
performing the first risk identification on the service processing request based on the stored first risk identification rule and a result of analyzing the service data.

5. The method according to any of claims 1 to 4, wherein the method further comprises:
receiving, from an intelligent platform device and at both the end user device and the cloud risk identification device, an updated risk identification policy data packet; and
synchronously updating, by the end user device and the cloud risk identification device, a locally stored risk identification policy data packet.

6. A risk identification system comprising:
an end user device; and
a cloud risk identification device;
wherein the end user device of the risk identification system is configured to execute a method comprising:
receiving (101) a service processing request;
extracting (101) service data from the service processing request;
performing (102) first risk identification on the service processing request based on a first stored risk identification rule with reference to the service data to generate a first risk identification result, wherein the first stored risk identification rule is stored at the end user device;
determining (103) whether the first risk identification result is a definite result or an indefinite result, wherein the definite result indicates that the first risk identification result can be determined and the indefinite result indicates that the first risk identification result cannot be determined (103); and
in response to determining that the first risk identification result is the indefinite result,
sending (104) a risk identification request that comprises the service data to the cloud risk identification device;
in response to determining that the first risk identification result is the definite result,
sending (105), by the end user device, the first risk identification result to the cloud risk identification device;
wherein the cloud risk identification device is configured to perform the steps of:
in response to receiving the risk identification request, perform second risk identification on the service processing request based on a second stored risk identification rule with reference to the service data to generate a second risk identification result, wherein the second stored risk identification rule is different from the first stored risk identification rule, wherein the second stored risk identification rule is stored at the cloud risk identification device; and
in response to receiving the first risk identification result,
storing the first risk identification result sent from the end user device,
obtaining service data of the first risk identification result, and
using the stored first risk identification result and the obtained service data as a training sample to optimize the second stored risk identification rule to improve risk identification accuracy.

7. The risk identification system of claim 6, wherein the end user device comprises a service processing unit, and wherein the service processing unit is configured to:
perform (106) risk control on the service processing request, in response to determining that the first risk identification result is the definite result.

8. The risk identification system of claim 6, wherein the first risk identification result is the indefinite result, and wherein the end user device is further configured to:
receive (203) the second risk identification result sent by the cloud risk identification device; and
perform (106) risk control on the service processing request based on the received, second risk identification result.

9. The risk identification system according to any one of claims 6 to 8, wherein performing the first risk identification on the service processing request based on the first stored risk identification rule with reference to the service data comprises:
analyzing the service data; and
performing the first risk identification on the service processing request based on the stored first risk identification rule and a result of analyzing the service data.

10. The risk identification system according to any one of claims 6 to 9, wherein the end user device and the cloud risk identification device are configured to:
receive, from an intelligent platform device, an updated risk identification policy data packet, and
synchronously update a locally stored risk identification policy data packet.

## Patentansprüche

1. Verfahren zur Risikoidentifizierung, das Folgendes umfasst:
Empfangen (101) einer Dienstleistungs-Verarbeitungsanfrage durch eine Endanwendereinrichtung;
Extrahieren (101) von Dienstleistungsdaten aus der Dienstleistungs-Verarbeitungsanfrage durch die Endanwendereinrichtung;
Durchführen (102) einer ersten Risikoidentifikation an der Dienstleistungs-Verarbeitungsanfrage durch die Endanwendereinrichtung auf der Grundlage einer ersten gespeicherten Risikoidentifikationsregel unter Bezugnahme auf die Dienstleistungsdaten, um ein erstes Risikoidentifikationsergebnis zu erzeugen, wobei die erste gespeicherte Risikoidentifikationsregel bei der Endanwendereinrichtung gespeichert ist;
Bestimmen (103) durch die Endanwendereinrichtung, ob das erste Risikoidentifikationsergebnis ein eindeutiges Ergebnis oder ein unbestimmtes Ergebnis ist, wobei das eindeutige Ergebnis angibt, dass das erste Risikoidentifikationsergebnis bestimmt werden kann, und das unbestimmte Ergebnis angibt, dass das erste Risikoidentifikationsergebnis nicht bestimmt werden kann;
als Antwort auf das Bestimmen, dass das erste Risikoidentifikationsergebnis das unbestimmte Ergebnis ist, Senden (104) einer Risikoidentifikationsanfrage, die die Dienstleistungsdaten umfasst, durch die Endanwendereinrichtung an eine Cloud-Risikoidentifikationseinrichtung, wobei die Risikoidentifikationsanfrage bewirkt, dass die Cloud-Risikoidentifikationseinrichtung auf der Grundlage einer zweiten gespeicherten Risikoidentifikationsregel unter Bezugnahme auf die Dienstleistungsdaten eine zweite Risikoidentifikation an der Dienstleistungsanfrage durchführt (202), um ein zweites Risikoidentifikationsergebnis zu erzeugen, wobei die zweite gespeicherte Risikoidentifikationsregel von der ersten gespeicherten Risikoidentifikationsregel verschieden ist, wobei die zweite gespeicherte Risikoidentifikationsregel bei der Cloud-Risikoidentifikationseinrichtung gespeichert ist;
als Antwort auf das Bestimmen, dass das erste Risikoidentifikationsergebnis ein eindeutiges Ergebnis ist:
Senden (105) des ersten Risikoidentifikationsergebnisses durch die Endanwendereinrichtung an die Cloud-Risikoidentifikationseinrichtung;
Empfangen und Speichern des ersten Risikoidentifikationsergebnisses, das von der Endanwendereinrichtung gesendet wird, bei der Cloud-Risikoidentifikationseinrichtung;
Erhalten von Dienstleistungsdaten des ersten Risikoidentifikationsergebnisses durch die Cloud-Risikoidentifikationseinrichtung; und
Verwenden i) des gespeicherten ersten Risikoidentifikationsergebnisses und ii) der erhaltenen Dienstleistungsdaten durch die Cloud-Risikoidentifikationseinrichtung als ein Trainingsbeispiel, um die zweite gespeicherte Risikoidentifikationsregel anzupassen, um die Risikoidentifikationsgenauigkeit zu verbessern.

2. Verfahren nach Anspruch 1, das ferner Folgendes umfasst:
als Antwort auf das Bestimmen, dass das erste Risikoidentifikationsergebnis das eindeutige Ergebnis ist, Durchführen (106) durch eine Dienstleistungs-Verarbeitungseinheit in der Endanwendereinrichtung einer Risikosteuerung an der Dienstleistungs-Verarbeitungsanfrage.

3. Verfahren nach Anspruch 1, wobei das erste Risikoidentifikationsergebnis das unbestimmte Ergebnis ist, wobei das Verfahren ferner Folgendes umfasst:
Empfangen (203) des zweiten Risikoidentifikationsergebnisses, das durch die Cloud-Risikoidentifikationseinrichtung gesendet wird, durch die Endanwendereinrichtung; und
Durchführen (106) einer Risikosteuerung an der Dienstleistungs-Verarbeitungsanfrage auf der Grundlage des empfangenen zweiten Risikoidentifikationsergebnisses.

4. Verfahren nach einem der Ansprüche 1 bis 3, wobei das Durchführen der ersten Risikoidentifikation an der Dienstleistungs-Verarbeitungsanfrage auf der Grundlage der ersten gespeicherten Risikoidentifikationsregel unter Bezugnahme auf die Dienstleistungsdaten Folgendes umfasst:
Analysieren der Dienstleistungsdaten; und
Durchführen der ersten Risikoidentifikation an der Dienstleistungs-Verarbeitungsanfrage auf der Grundlage der gespeicherten ersten Risikoidentifikationsregel und eines Ergebnisses des Analysierens der Dienstleistungsdaten.

5. Verfahren nach einem der Ansprüche 1 bis 4, wobei das Verfahren ferner Folgendes umfasst:
Empfangen eines aktualisierten Risikoidentifikationsstrategie-Datenpakets von einer intelligenten Plattformeinrichtung und sowohl an der Endanwendereinrichtung als auch an der Cloud-Risikoidentifikationseinrichtung; und
synchronisiertes Aktualisieren eines lokal gespeicherten Risikoidentifikationsstrategie-Datenpakets durch die Endanwendereinrichtung und die Cloud-Risikoidentifikationseinrichtung.

6. Risikoidentifikationssystem, das Folgendes umfasst:
eine Endanwendereinrichtung; und
eine Cloud-Risikoidentifikationseinrichtung;
wobei die Endanwendereinrichtung des Risikoidentifikationssystems ausgelegt ist, ein Verfahren auszuführen, das Folgendes umfasst:
Empfangen (101) einer Dienstleistungs-Verarbeitungsanfrage;
Extrahieren (101) von Dienstleistungsdaten aus der Dienstleistungs-Verarbeitungsanfrage;
Durchführen (102) einer ersten Risikoidentifikation an der Dienstleistungs-Verarbeitungsanfrage auf der Grundlage einer ersten gespeicherten Risikoidentifikationsregel unter Bezugnahme auf die Dienstleistungsdaten, um ein erstes Risikoidentifikationsergebnis zu erzeugen, wobei die erste gespeicherte Risikoidentifikationsregel bei der Endanwendereinrichtung gespeichert ist;
Bestimmen (103), ob das erste Risikoidentifikationsergebnis ein eindeutiges Ergebnis oder ein unbestimmtes Ergebnis ist, wobei das eindeutige Ergebnis angibt, dass das erste Risikoidentifikationsergebnis bestimmt werden kann, und das unbestimmte Ergebnis angibt, dass das erste Risikoidentifikationsergebnis nicht bestimmt (103) werden kann; und
als Antwort auf das Bestimmen, dass das erste Risikoidentifikationsergebnis das unbestimmte Ergebnis ist,
Senden (104) einer Risikoidentifikationsanfrage, die die Dienstleistungsdaten umfasst, an die Cloud-Risikoidentifikationseinrichtung;
als Antwort auf das Bestimmen, dass das erste Risikoidentifikationsergebnis das eindeutige Ergebnis ist,
Senden (105) des Risikoidentifikationsergebnisses durch die Endanwendereinrichtung an die Cloud-Risikoidentifikationseinrichtung;
wobei die Cloud-Risikoidentifikationseinrichtung ausgelegt ist, die folgenden Schritte durchzuführen:
als Antwort auf das Empfangen der Risikoidentifikationsanfrage Durchführen einer zweiten Risikoidentifikation an der Dienstleistungs-Verarbeitungsanfrage auf der Grundlage einer zweiten gespeicherten Risikoidentifikationsregel unter Bezugnahme auf die Dienstleistungsdaten, um ein zweites Risikoidentifikationsergebnis zu erzeugen, wobei die zweite gespeicherte Risikoidentifikationsregel von der ersten gespeicherten Risikoidentifikationsregel verschieden ist, wobei die zweite gespeicherte Risikoidentifikationsregel bei der Cloud-Risikoidentifikationseinrichtung gespeichert ist; und
als Antwort auf das Empfangen des ersten Risikoidentifikationsergebnisses,
Speichern des ersten Risikoidentifikationsergebnisses, das von der Endanwendereinrichtung gesendet wird,
Erhalten von Dienstleistungsdaten des ersten Risikoidentifikationsergebnisses; und
Verwenden des gespeicherten ersten Risikoidentifikationsergebnisses und der erhaltenen Dienstleistungsdaten als ein Trainingsbeispiel, um die zweite gespeicherte Risikoidentifikationsregel anzupassen, um die Risikoidentifikationsgenauigkeit zu verbessern.

7. Risikoidentifikationssystem nach Anspruch 6, wobei die Endanwendereinrichtung eine Dienstleistungs-Verarbeitungseinheit umfasst und wobei die Dienstleistungs-Verarbeitungseinheit ausgelegt ist zum:
Durchführen (106) von Risikosteuerung an der Dienstleistungs-Verarbeitungsanfrage als Antwort auf das Bestimmen, dass das erste Risikoidentifikationsergebnis das eindeutige Ergebnis ist.

8. Risikoidentifikationssystem nach Anspruch 6, wobei das erste Risikoidentifikationsergebnis das unbestimmte Ergebnis ist und wobei die Endanwendereinrichtung ferner ausgelegt ist zum:
Empfangen (203) des zweiten Risikoidentifikationsergebnisses, das durch die Cloud-Risikoidentifikationseinrichtung gesendet wird; und
Durchführen (106) von Risikosteuerung an der Dienstleistungs-Verarbeitungsanfrage auf der Grundlage des empfangenen zweiten Risikoidentifikationsergebnisses.

9. Risikoidentifikationssystem nach einem der Ansprüche 6 bis 8, wobei das Durchführen der ersten Risikoidentifikation an der Dienstleistungs-Verarbeitungsanfrage auf der Grundlage der ersten gespeicherten Risikoidentifikationsregel unter Bezugnahme auf die Dienstleistungsdaten Folgendes umfasst:
Analysieren der Dienstleistungsdaten; und
Durchführen der ersten Risikoidentifikation an der Dienstleistungs-Verarbeitungsanfrage auf der Grundlage der gespeicherten ersten Risikoidentifikationsregel und eines Ergebnisses des Analysierens der Dienstleistungsdaten.

10. Risikoidentifikationssystem nach einem der Ansprüche 6 bis 9, wobei die Endanwendereinrichtung und die Cloud-Risikoidentifikationseinrichtung ausgelegt sind zum:
Empfangen eines aktualisierten Risikoidentifikationsstrategie-Datenpakets von einer intelligenten Plattformeinrichtung, und
synchronisierten Aktualisieren eines lokal gespeicherten Risikoidentifikationsstrategie-Datenpakets.

## Revendications

1. Procédé d'identification de risques, comprenant :
la réception (101), par un dispositif d'utilisateur final, d'une demande de traitement de service ;
l'extraction (101), par le dispositif d'utilisateur final, de données de service de la demande de traitement de service ;
la réalisation (102), par le dispositif d'utilisateur final, d'une première identification de risques sur la demande de traitement de service selon une première règle d'identification de risques stockée par référence aux données de service pour générer un premier résultat d'identification de risques, la première règle d'identification de risques stockée étant stockée au niveau du dispositif d'utilisateur final ;
la détermination (103), par le dispositif d'utilisateur final, si le premier résultat d'identification de risques est un résultat défini ou un résultat indéfini, le résultat défini indiquant que le premier résultat d'identification de risques peut être déterminé et le résultat indéfini indiquant que le premier résultat d'identification de risques ne peut pas être déterminé ;
en réponse à la détermination que le premier résultat d'identification de risques est le résultat indéfini,
l'envoi (104), par le dispositif d'utilisateur final, d'une demande d'identification de risques qui comprend les données de service à un dispositif d'identification de risques dans le cloud, la demande d'identification de risques amenant le dispositif d'identification de risques dans le cloud à réaliser (202) une deuxième identification de risques sur la demande de traitement de service selon une deuxième règle d'identification de risques stockée par référence aux données de service pour générer un deuxième résultat d'identification de risques, la deuxième règle d'identification de risques stockée étant différente de la première règle d'identification de risques stockée, la deuxième règle d'identification de risques stockée étant stockée au niveau du dispositif d'identification de risques dans le cloud ;
en réponse à la détermination que le premier résultat d'identification de risques est le résultat défini,
l'envoi (105), par le dispositif d'utilisateur final, du premier résultat d'identification de risques au dispositif d'identification de risques dans le cloud,
la réception et le stockage, au niveau du dispositif d'identification de risques dans le cloud, du premier résultat d'identification de risques envoyé depuis le dispositif d'utilisateur final, et
l'obtention, par le dispositif d'identification de risques dans le cloud, de données de service du premier résultat d'identification de risques ; et
l'utilisation, par le dispositif d'identification de risques dans le cloud, i) du premier résultat d'identification de risques stocké et ii) des données de service obtenues comme échantillon d'apprentissage pour optimiser la deuxième règle d'identification de risques stockée pour améliorer la précision d'identification de risques.

2. Procédé selon la revendication 1, comprenant également :
en réponse à la détermination que le premier résultat d'identification de risques est un résultat défini, la réalisation (106), par une unité de traitement de service dans le dispositif d'utilisateur final, d'un contrôle de risques sur la demande de traitement de service.

3. Procédé selon la revendication 1, dans lequel le premier résultat d'identification de risques est le résultat indéfini, le procédé comprenant également :
la réception (203), par le dispositif d'utilisateur final, du deuxième résultat d'identification de risques envoyé par le dispositif d'identification de risques dans le cloud ; et
la réalisation (106) d'un contrôle de risques sur la demande de traitement de service en fonction du deuxième résultat d'identification de risques reçu.

4. Procédé selon l'une quelconque des revendications 1 à 3, dans lequel la réalisation de la première identification de risques sur la demande de traitement de service selon la première règle d'identification de risques stockée par référence aux données de service comprend :
l'analyse des données de service ; et
la réalisation de la première identification de risques sur la demande de traitement de service selon la première règle d'identification de risques stockée et un résultat de l'analyse des données de service.

5. Procédé selon l'une quelconque des revendications 1 à 4, le procédé comprenant également :
la réception, en provenance d'un dispositif de plateforme intelligent et au niveau à la fois du dispositif d'utilisateur final et du dispositif d'identification de risques dans le cloud, d'un paquet de données de politique d'identification de risques mis à jour ; et
la mise à jour synchrone, par le dispositif d'utilisateur final et le dispositif d'identification de risques dans le cloud, d'un paquet de données de politique d'identification de risques stocké localement.

6. Système d'identification de risques, comprenant :
un dispositif d'utilisateur final ; et
un dispositif d'identification de risques dans le cloud ;
le dispositif d'utilisateur final du système d'identification de risques étant configuré pour exécuter un procédé comprenant :
la réception (101) d'une demande de traitement de service ;
l'extraction (101) de données de service de la demande de traitement de service ;
la réalisation (102) d'une première identification de risques sur la demande de traitement de service selon une première règle d'identification de risques stockée par référence aux données de service pour générer un premier résultat d'identification de risques, la première règle d'identification de risques stockée étant stockée au niveau du dispositif d'utilisateur final ;
la détermination (103) si le premier résultat d'identification de risques est un résultat défini ou un résultat indéfini, le résultat défini indiquant que le premier résultat d'identification de risques peut être déterminé et le résultat indéfini indiquant que le premier résultat d'identification de risques ne peut pas être déterminé (103) ; et
en réponse à la détermination que le premier résultat d'identification de risques est le résultat indéfini,
l'envoi (104) d'une demande d'identification de risques qui comprend les données de service au dispositif d'identification de risques dans le cloud ;
en réponse à la détermination que le premier résultat d'identification de risques est le résultat défini,
l'envoi (105), par le dispositif d'utilisateur final, du premier résultat d'identification de risques au dispositif d'identification de risques dans le cloud ;
le dispositif d'identification de risques dans le cloud étant configuré pour réaliser les étapes suivantes :
en réponse à la réception de la demande d'identification de risques, la réalisation d'une deuxième identification de risques sur la demande de traitement de service selon une deuxième règle d'identification de risques stockée par référence aux données de service pour générer un deuxième résultat d'identification de risques, la deuxième règle d'identification de risques stockée étant différente de la première règle d'identification de risques stockée, la deuxième règle d'identification de risques stockée étant stockée au niveau du dispositif d'identification de risques dans le cloud ; et
en réponse à la réception du premier résultat d'identification de risques,
le stockage du premier résultat d'identification de risques envoyé depuis le dispositif d'utilisateur final,
l'obtention de données de service du premier résultat d'identification de risques, et
l'utilisation du premier résultat d'identification de risques stocké et des données de service obtenues comme échantillon d'apprentissage pour optimiser la deuxième règle d'identification de risques stockée pour améliorer la précision d'identification de risques.

7. Système d'identification de risques selon la revendication 6, dans lequel le dispositif d'utilisateur final comprend une unité de traitement de service, et dans lequel l'unité de traitement de service est configurée pour :
réaliser (106) un contrôle de risques sur la demande de traitement de service, en réponse à la détermination que le premier résultat d'identification de risques est un résultat défini.

8. Système d'identification de risques selon la revendication 6, dans lequel le premier résultat d'identification de risques est le résultat indéfini, et dans lequel le dispositif d'utilisateur final est configuré également pour :
recevoir (203) le deuxième résultat d'identification de risques envoyé par le dispositif d'identification de risques dans le cloud ; et
réaliser (106) un contrôle de risques sur la demande de traitement de service en fonction du deuxième résultat d'identification de risques reçu.

9. Système d'identification de risques selon l'une quelconque des revendications 6 à 8, dans lequel la réalisation de la première identification de risques sur la demande de traitement de service selon la première règle d'identification de risques stockée par référence aux données de service comprend :
l'analyse des données de service ; et
la réalisation de la première identification de risques sur la demande de traitement de service selon la première règle d'identification de risques stockée et un résultat de l'analyse des données de service.

10. Système d'identification de risques selon l'une quelconque des revendications 6 à 9, dans lequel le dispositif d'utilisateur final et le dispositif d'identification de risques dans le cloud sont configurés pour :
recevoir, en provenance d'un dispositif de plateforme intelligent, un paquet de données de politique d'identification de risques mis à jour, et
mettre à jour de manière synchrone un paquet de données de politique d'identification de risques stocké localement.
